# EUROPEAN PATENT APPLICATION

(11) **EP 3 254 996 A1**
(43) Date of publication of application: **13.12.2017**
(21) Application number: 16305688.0
(22) Date of filing: 10.06.2016
(51) Int. Cl.: B65G 47/86

(54) **A GRIPPING ASSEMBLY FOR A RECEPTACLE HANDLING MACHINE AND A METHOD FOR PRODUCING A GRIPPING ASSEMBLY FOR A RECEPTACLE HANDLING MACHINE**

(71) Applicant: SIDEL PARTICIPATIONS, 76930 Octeville-sur-Mer (FR)
(72) Inventor: RAFFAINI, Nicola, 43126 Parma (IT); ZONI, Roberto, 43126 Parma (IT)
(74) Representative: Siloret, Patrick

(57) **Abstract**

There is described a gripping assembly (1) having a main gripping arm (3) and an auxiliary gripping arm (4) adapted to grip in cooperation one respective receptacle (2). The main gripping arm (3) comprises a plastic base structure (8) having a cavity (13) and a magnet element (9) housed within the cavity (13) and being encapsulated within the plastic base structure (8). The main gripping arm (3) also comprises at least one reticular portion (19, 20).

There is also described a method of producing such a gripping assembly (1). The method comprises the steps of molding the plastic base structure (8) during a first molding phase, inserting the magnet element (9) into the cavity (13) of the plastic base structure (8) and encapsulating the magnet element (9) during a second molding phase.

## Description

### TECHNICAL FIELD

The present invention relates to a gripping assembly for gripping receptacles in a receptacle handling machine. The present invention also relates to a method for producing such a gripping assembly.

### BACKGROUND ART

Receptacles, such as containers or bottles made of base components, like glass, plastics, aluminum, steel, and composite containers, and for any type of pourable product, such as carbonated liquids (e.g. sparkling water, soft drinks and beer), non-carbonated liquids (including still water, juices, teas, sport drinks, liquid cleaners, wine, etc), emulsions, suspensions, high viscosity liquids and beverages containing pulps, are handled within a handling machine by one or more respective handling devices for e.g. sterilizing, filling, capping, labeling the receptacles and/or for preparing the receptacles for distribution.

Typically the handling machine is of the linear or rotary type and during the handling and/or during the transport of the receptacles from one handling device to another the receptacles need to be retained by respective retaining units.

In a handling machine of the rotary type the plurality of retaining units are typically arranged on a peripheral portion of a respective rotatable carousel which, in use, is actuated by one or more motors to rotate around a respective central carousel axis. Thus, in use, the retaining units advance along a circular path.

There are varying kinds of retaining units, one of these is known to comprise one respective gripping assembly adapted to selectively grip one respective receptacle. Typically, in use, each gripping assembly advancing along the circular path, grips the respective receptacle along an arc-shaped path defined by the rotation of the carousel.

Generally, such a gripping assembly has a first and a second gripping arm coupled to one another and is configured to be in a closed configuration at which the first and the second gripping arm grip in collaboration one respective receptacle and an open configuration at which the gripping assembly releases the respective receptacle. In particular, the first and the second gripping arm are configured to rotate around respective rotation axes for moving the gripping assembly between the closed and the open configuration.

Furthermore, typically such a gripping assembly comprises a spring element interacting with the first and the second gripping arm and configured to bias the gripping assembly into the closed or open configuration.

Commonly, the gripping assembly also has a cam follower configured to interact with a respective static cam profile of the handling machine so as to act against the biasing force of the spring element and to move the gripping assembly into the open or closed configuration.

Additionally, typically such a gripping assembly is made from a metal coming along with elevated costs for each single gripping assembly. As well, such a metallic gripping assembly has a significant weight meaning that the motor required to actuate rotation of the carousel to which the gripping assemblies are mounted needs to provide for an elevated performance coming along with elevated costs and a significant power consumption.

Furthermore, the spring member of such a gripping assembly is known to be critical in terms of reliability and wear. Additionally, the spring member is critical in terms of the hygienic design of such a gripping assembly. During operation the handling machine and accordingly the installed gripping assemblies need to be subjected to regular cleaning and/or sterilization cycles. The cleaning and/or sterilization of the spring members of the installed gripping assemblies is rather challenging.

Another type of gripping assembly is disclosed in EP-B-1868746 in which the action of the spring element is replaced by the interaction of two permanent magnets.

The gripping assembly is moveable between a closed and an open configuration and comprises a first and a second gripping arm of a plastic material. Each one of first and second gripping arms comprises a cavity and a permanent magnet placed within the cavity. The permanent magnets are designed to attract or expel each other so as to bias the gripping assembly into its closed or open configuration.

A drawback of such a gripping assembly is seen in that the permanent magnets are partially exposed to the environment. This is critical as there is a significant risk that the permanent magnets lose their hold within the respective cavities during operation increasing the possibility of malfunction of the gripping assembly. Furthermore, as the permanent magnets are not encapsulated edges between the permanent magnet and the cavity form which challenge the cleaning/sterilization of such a gripping assembly.

Furthermore, document EP-B-2-293-998 discloses another gripping assembly having a first and a second gripping arm each one having one relative permanent magnet encapsulated within a respective cavity. In particular, each one of first and second gripping arms comprise a respective metallic base and a cavity portion mounted to the metallic base and carrying the cavity. Each cavity portion is of an ultrasonically weldable plastic material.

Furthermore, each permanent magnet is sandwiched between a respective spacer element and a respective cover and the relative cover is welded by means of ultrasonic welding to a relative rim surrounding the respective cavity for encapsulating the corresponding permanent magnet.

However, due to the metallic base structure the gripping assembly disclosed in EP-B-2-293-998 come along with a significant weight. Additionally, the overall production of such a gripping assembly and the encapsulation of the permanent magnets is lengthy as varying processing steps with different production machines are involved.

### DISCLOSURE OF INVENTION

It is therefore an object of the present invention to provide a method to overcome, in a straightforward and low-cost manner, the aforementioned drawbacks.

According to the present invention, there is provided a method as claimed in claim 1.

According to the present invention, there is provided a gripping assembly as claimed in claim 8.

### BRIEF DESCRIPTION OF THE DRAWINGS

A non-limiting embodiment of the present invention will be described by way of example with reference to the accompanying drawings, in which:
Figure 1 shows a gripping assembly according to the present invention in a first configuration engaging with a receptacle;
Figure 2 shows the gripping assembly of Figure 1 in a second configuration disengaging from a receptacle;
Figure 3 shows an exploded view of the gripping assembly of Figures 1 and 2;
Figures 4 shows a detail of the gripping assembly of Figures 1 to 3; and
Figures 5a to 5e shows the steps of producing the detail of the gripping assembly shown in Figure 4, with parts removed for clarity.

### BEST MODES FOR CARRYING OUT THE INVENTION

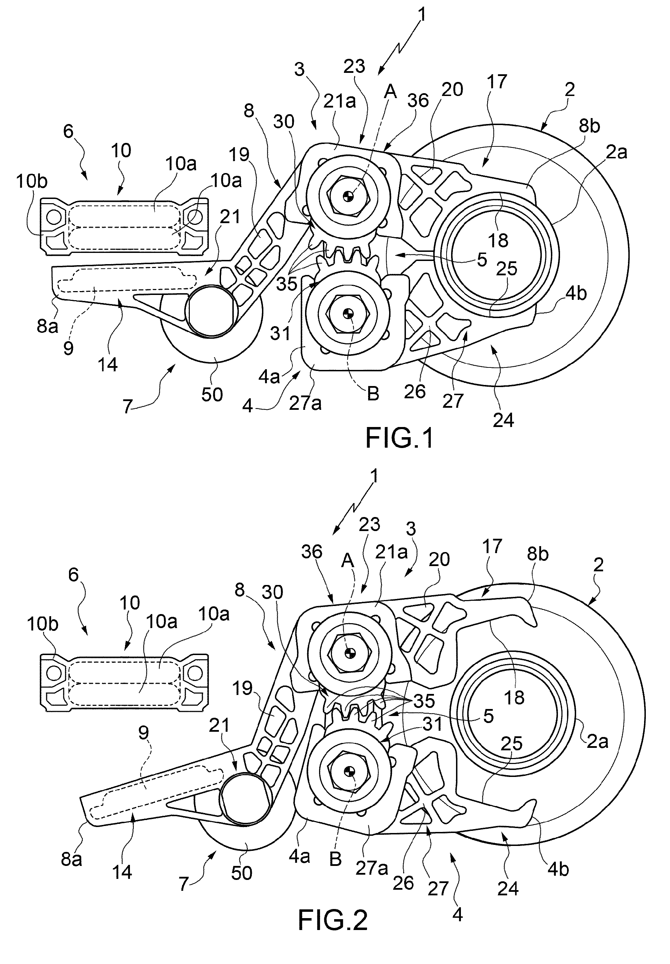

Number 1 in Figures 1 and 2 illustrates as a whole a gripping assembly for a receptacle handling machine (not shown and known as such), in particular of the linear or rotary type, adapted to move between a closed configuration (Figure 1) at which gripping assembly 1 is adapted to grip, in use, one receptacle, in particular one bottle 2 and an open configuration (Figure 2) at which the gripping assembly is adapted to disengage from bottle 2.

In the following, the description of the example embodiment is based on gripping assembly 1 being adapted to grip bottles 2, which, however, must be understood in a non-limiting manner as also other receptacles such as containers and pre-forms may be gripped by gripping assembly 1.

In particular, gripping assembly 1 is adapted to grip bottles 2 made of base components, like glass, plastics, etc. and for any type of pourable product, such as carbonated liquids (e.g. sparkling water, soft drinks and beer), non-carbonated liquids (including still water, juices, teas, sport drinks, liquid cleaners, wine, etc), emulsions, suspensions, high viscosity liquids and beverages containing pulps.

Furthermore, gripping assembly 1 is designed to be arranged in a manner known as such on a conveyor device (not shown and known as such) of the handling machine, in particular, gripping assembly 1 being supported by a support unit (not shown) of the conveyor device. The conveyor device being adapted to advance gripping assembly 1 along a path (not shown) through a receiving and a delivery station.

In more detail, the gripping assembly 1 is configured to receive one bottle 2 at the receiving station and to release bottle 2 at the delivery station. In particular, in use, gripping assembly 1 is controlled into the closed configuration for gripping bottle 2 during advancement between the receiving station and the delivery station.

With particular reference to Figures 1 to 3, gripping assembly 1 comprises a main gripping arm 3 and an auxiliary gripping arm 4 configured to selectively grip in cooperation one bottle 2.

In greater detail, each one of gripping arms 3 and 4 is adapted to rotate around one respective rotation axis A and B for moving gripping assembly 1 between the closed and the open configuration. In particular, axes A and B are parallel to each other, even more particularly axes A and B have a vertical orientation.

Gripping assembly 1 further comprises:
- a coupling assembly 5 coupling gripping arms 3 and 4 one to another;
- biasing means 6 adapted to bias gripping assembly 1 into its closed or open configuration, in the specific example shown in its closed configuration; and
- transferring means 7 adapted to transfer an input force to an actuation force for moving gripping assembly 1 to the open or closed configuration, in the specific example to the open configuration.

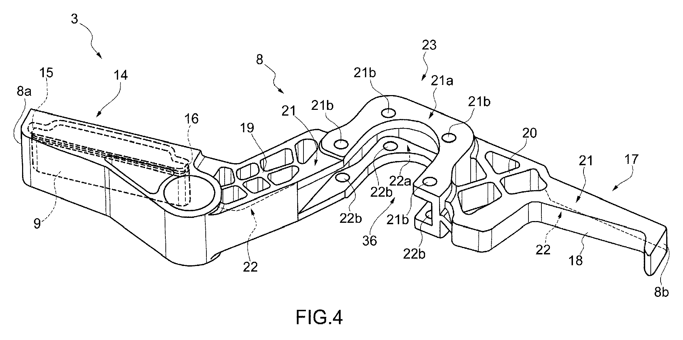

With particular reference to Figures 1 to 4, gripping arm 3 comprises a plastic base structure 8 and at least one magnet element 9, in particular magnet element 9 being encapsulated within plastic base structure 8.

The magnet element 9 is configured to interact with a magnet assembly 10 of gripping assembly 1 for biasing gripping assembly 1 into its closed or open configuration, in the specific example shown into the closed configuration. Magnet assembly 10 is spaced apart from gripping arm 3. In particular, magnet assembly 10 and magnet element 9 defining biasing means 6.

In the specific example shown, magnet assembly 10 comprises two magnets 10a being encapsulated in a plastic housing 10b.

In greater detail, plastic base structure 8 comprises a cavity 13 designed to house magnet element 9.

In more detail, cavity 13 is arranged in a cavity section 14 of plastic base structure 8. In particular, cavity portion 14 being arranged at a first end portion 8a of plastic base structure 8. In further detail, cavity 13 has a shape similar to the configuration of magnet element 9 so as to fully house magnet element 9, preferably without clearance. As well, cavity 13 has a depth larger than the height of magnet element 9.

Gripping arm 3 also comprises a cover portion 15 designed to cover magnet element 9 housed within cavity 13. Preferably, gripping arm 3 has also a spacer element 16 arranged between magnet element 9 and cover portion 15. Even more preferably, spacer element 16 has a platelike configuration and a shape similar to the upper profile of magnet element 9.

As described further below in more detail, plastic base structure 8 is produced during a first molding phase and cover portion 15 is obtained during a second molding phase after insertion of magnet element 9 and, preferably of spacer element 16, in particular for encapsulating magnet element 9.

In further detail, gripping arm 3, in particular plastic base structure 8 has a clamping section 17 adapted to, in use, at least partially engage with bottle 2, in particular with neck 2a of bottle 2. In particular, clamping section 17 has a semicircular indentation 18 configured to partially receive and encircle one side of neck 2a of bottle 2. Clamping section 17 is arranged at a second end portion 8b of plastic base structure 8 opposite of end portion 8a.

Additionally, plastic base structure 8 comprises at least one main reticular portion 19, preferably being arranged between end portions 8a and 8b, even more preferably arranged between cavity section 14 and clamping section 17. In particular, main reticular portion 19 is designed in such a manner to reduce the quantity of plastic material needed for producing plastic base structure 8 and to obtain a stability at least equal to the one obtainable with a pure solid design. As well, main reticular portion 19 is designed to facilitate the cleaning and/or sterilization of gripping arm 3.

Additionally, plastic base structure 8 has at least one auxiliary reticular portion 20, in particular being arranged in the area of clamping section 17. Similar to main reticular portion 19 also auxiliary reticular portion 20 is designed in such a manner to reduce the quantity of plastic material needed and providing for at least the same stability compared to a pure solid workpiece. As well, auxiliary reticular portion 20 is similar to main reticular portion 19 designed to facilitate the cleaning and/or sterilization of gripping arm 3.

Furthermore, gripping arm 3 has a z-shaped configuration, in particular defined by cavity section 14, main reticular portion 19 and clamping section 17.

With particular reference to Figures 1 and 2, axis A is orthogonal to an upper and lower surface 21 and 22 of gripping arm 3, in particular of plastic base structure 8. More specifically, axis A is arranged at an intermediate section 23 of plastic base structure 8. More specifically, intermediate section 23 is arranged between end portions 8a and 8b, in particular between reticular portion 19 and clamping section 17, even more particular between reticular portions 19 and 20.

With particular reference to Figures 1 to 3, gripping arm 4 comprises a clamping section 24 adapted to engage with bottle 2, in particular neck 2a. Furthermore, clamping section 24 is configured to cooperate with clamping section 17 for gripping bottle 2. In particular, clamping section 24 has a semicircular indentation 25 complementary to indentation 18 and clamping section 24 is configured to partially receive and encircle the other side of neck 2a of bottle 2.

Preferably, gripping arm 4 comprises a reticular portion 29, in particular provided in the area of clamping section 24. Reticular portion 26 is similar to auxiliary reticular portion 20 and is designed to provide for a stability which at least equals the one of a solid workpiece. As well, reticular portion 26 is designed to facilitate the cleaning and/or sterilization of gripping assembly 1.

Furthermore, axis B is arranged in the area of a first end portion 4a of gripping arm 4 and clamping section 24 is arranged in the area of a second end portion 4b of gripping arm 4 opposite of end portion 4a. In particular, axis B is orthogonal to an upper and lower surface portion 27 and a lower surface (not shown) of gripping arm 4.

Preferentially, gripping arm 4 is of a plastic material. Even more preferentially gripping arm 4 is produced in a plastic molding process.

With particular reference to Figures 1 to 3, coupling assembly 5 is adapted to transfer a rotation of gripping arm 3 around axis A to gripping arm 4 around axis B so that gripping arms 3 and 4 move synchronously. More specifically, gripping assembly 1 is configured in such a manner that through rotation of gripping arms 3 and 4 clamping sections 17 and 24 move away or approach each other. Even more specifically, gripping assembly 1 is configured so as that clamping sections 17 and 24 approach each other when being controlled from the open configuration to the closed configuration and clamping sections 17 and 24 withdraw from each other when being controlled from the closed configuration to the open configuration.

Furthermore, gripping assembly 1 is configured to change the relative position of magnet element 9 and magnet assembly 10 to each other during a rotation of gripping arm 3.

In the specific example shown, gripping assembly 1 is designed so that during a movement of gripping assembly 1 from the closed to the open configuration magnet element 9 is withdrawn from magnet assembly 10 and during a movement from the open to the closed configuration magnet element 9 approaches magnet assembly 10. Furthermore, in the closed configuration of magnet element 9 and magnet assembly 10 are arranged substantially parallel to each other.

Preferably, coupling assembly 5 comprises:
- a first actuation element 30 connected to gripping arm 3; and
- a second actuation element 31 connected to gripping arm 4 and adapted to interact with actuation element 30.

Favorably, actuation element 30 comprises first engagement means 32 and actuation element 31 has second engagement means 33, in particular engagement means 32 and 33 engaging and cooperating with each other.

Actuation element 30 further comprises a base body 34 carrying engagement means 32. In particular, base body 34 has a substantially parallelepiped, even more particular a substantially rectangular parallelepiped shape.

Favorably, engagement means 32 comprise a plurality of tooth members 35 projecting away from base portion 35.

Furthermore, gripping arm 3, in particular plastic base structure 8 comprises a housing recess 36 adapted to at least partially receive actuation element 31. In particular, housing recess 36 receives base body 34. Favorably, housing recess 36 is arranged in the area of intermediate section 23. Thus, preferably housing recess 36 is arranged between main reticular portion 19 and clamping section 17.

In more detail, housing recess 36 comprises an upper surface portion 21a and a lower surface portion 22a. In particular, upper surface 21 and lower surface 22 carry respectively upper surface portion 21a and lower surface portion 22a.

In even greater detail, upper surface portion 21a and lower surface portion 22a have a U-shaped profile and sandwich at least partially in between base body 34.

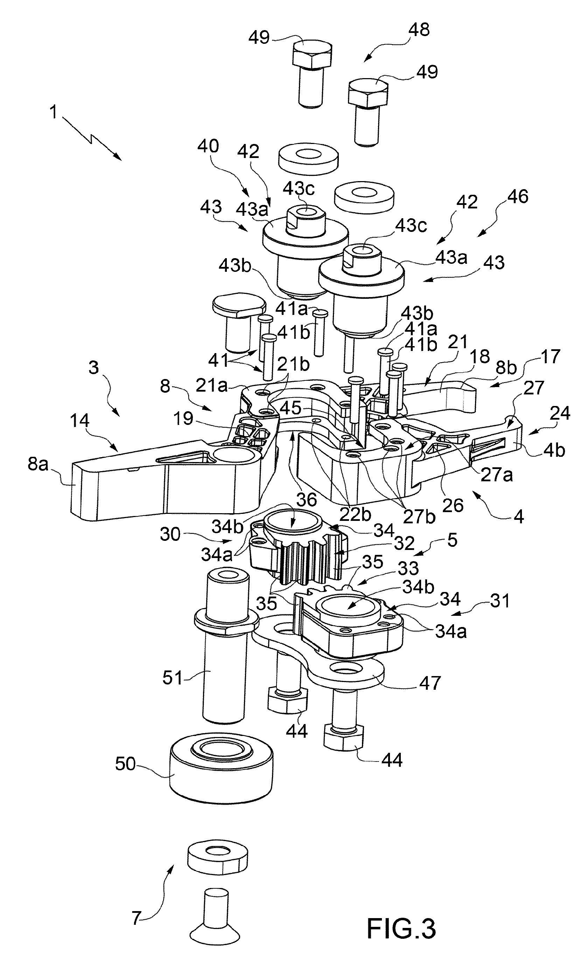

With particular reference to Figure 3, gripping arm 3 also comprises fixing means 40 adapted to fix actuation element 30 with housing recess 36.

In more detail, fixing means 40 are configured to cooperate with a plurality of upper and lower holes 21b, 22b of gripping arm 3 and a plurality of through-holes 34a of actuation element 30.

In even more detail, upper surface portion 21a comprises upper holes 21b and lower surface portion 22a comprises lower holes 22b. Thereby, each upper hole 21b is coaxially arranged with one respective lower hole 22b. Furthermore, through-holes 34a are coaxially arranged with one respective upper and one respective lower hole 21b and 22b and are provided on base body 34.

In greater detail, fixing means 40 comprise a plurality of pin members 41 each one extending through one respective through-hole 34a and the relative upper and lower holes 21b and 22b. In particular, each pin member 41, in particular having a mushroom-like shape, comprises a head portion 41a and a plain shank portion 41b.

In even greater detail, each respective head portion 41a contacts upper surface portion 21a and each respective plain shank portion 41b extends through one respective through-hole 34a and the relative upper and lower holes 21b and 22b. It must be noted, that each pin member 41 is arranged within the respective through-hole 34a in such a manner to be loosely housed within the respective through-hole 34a.

Furthermore, fixing means 40 comprise securing means, in particular a screw assembly 42 configured to secure pin members 41. In particular, screw assembly 42 interacts with the respective head portions 41a of pin members 41.

Screw assembly 42 comprises a bushing member 43 partially placed within a central hole 34b of actuation element 30, in particular of base body 34. In particular, bushing member 43 is placed coaxially with axis A and is arranged in such a manner to allow for synchronous rotation of actuation element 30 and of gripping arm 3 around axis A.

In greater detail, bushing member 43 comprises a circular shoulder portion 43a interacting with pin members 41, in particular with the respective head portions 41a. In even greater detail, the respective head portions 41a are at least partially sandwiched between shoulder portion 43a and upper surface portion 21a so as to secure pin members 41.

Screw assembly 42 also comprises a securing element 44, in the specific case a threaded screw interacting with a lower portion 43b of bushing member 43 and with lower surface portion 22a for securing bushing member 43 and gripping arm 3, in particular plastic base structure 8 to one another in such a manner that gripping arm 3, in particular plastic base structure 8 is adapted to rotate around axis A.

Furthermore, gripping arm 4 comprises a housing recess 45 adapted to at least partially receive actuation element 32. In particular, housing recess 45 is arranged in the area of first end portion 4a. Similar to housing recess 36, housing recess 45 comprises an upper surface portion 27a and a lower surface portion (not shown). In particular, upper surface 27 and lower surface 28 carry respectively upper surface portion 27a and the lower surface portion of housing recess 45. Furthermore, upper surface portion 27a comprises upper holes 27b and the lower surface portion of housing recess 45 comprises a plurality of lower holes (not shown). Thereby, each upper hole 27b is coaxially arranged with one respective lower hole of housing recess 45.

As actuation element 31 is similar to actuation element 30 the following description is limited to the differences between them, and using the same references, where possible, for identical or corresponding parts.

In particular, the respective through-holes 34a are coaxially arranged with one respective upper hole 27b and one respective lower hole of housing recess 45.

Furthermore, gripping arm 4 also comprises fixing means 46 adapted to fix actuation element 31 with housing recess 45.

As fixing means 46 are similar to fixing means 40 the following description is limited to the differences between them, and using the same references, where possible, for identical or corresponding parts.

In particular, each pin member 41 of fixing means 46 extends through one respective through-hole 34a and the relative upper hole 27b and the relative lower hole of housing recess 45. As well, the respective head portions 41a are at least partially sandwiched between shoulder portion 43a of the respective bushing member 43 and upper surface portion 27a.

Furthermore, the respective bushing member 43 is placed coaxially with axis B and is arranged in such a manner to allow for rotation of synchronous actuation element 31 and gripping arm 4.

As well, the respective securing element 44 interacts with lower portion 43b of the respective bushing member 43 and with the lower surface portion of housing recess 45 for securing bushing member 43 and gripping arm 4 to one another in such a manner that gripping arm 4 is adapted to rotate around axis B.

With particular reference to Figure 3, gripping arms 3 and 4 are connected one to another, in particular by means of a connecting member 47, in the example shown a plate element, in such a manner that engagement means 32 and 33 are and remain engaged to one another. In particular, gripping arms 3 and 4 are connected so as that the plurality of tooth 35 of engagement means 32 and the plurality of tooth 35 of engagement means 33 contact each other.

In more detail, connecting member 47 partially contacts lower surface 21 and the lower surface of gripping arm 4. In particular, connecting member 47 is arranged to contact lower surface portion 21a and the lower surface portion of housing recess 45. Furthermore, connecting member 47 is fastened by screw elements 44 in such a manner that gripping arm 3 and gripping arm 4 are adapted to rotate around axis A and B, respectively.

With particular reference to Figure 3, gripping assembly 1 also comprises fastening means 48 adapted to fasten gripping assembly 1 to the relative support unit of the transfer device. In more detail, fastening means 48 are configured to interact with screw assemblies 42 and the support unit. In even more detail, fastening means 48 comprise two screw elements 49, each one adapted to interact with the support unit and one respective screw assembly 42, in particular one respective bushing member 43, even more particular with one respective upper portion 43c of the relative bushing member 43 opposite of lower portion 43b.

With particular reference to Figures 1 to 3, transferring means 7 are configured to interact with gripping arm 3 and to transfer the input force to a rotation of gripping arm 3 around axis A. In particular, transferring means 7 are configured to support counteraction of the force generated by biasing means 6.

In greater detail, transferring means 7 comprise a cam follower 50 connected to gripping arm 3, in particular to plastic base structure 8. Transferring means 7 also comprise a pin or bolt member 51 carrying cam follower 51 and mounted to plastic base structure 8.

Furthermore, cam follower 50 is adapted to cooperate with a cam profile (known as such and not shown) of the transferring device. In particular, cam follower 50 is configured to run along the cam profile. The cam profile is configured in a manner known as such to direct cam follower 50 from a relative first position (see Figure 1) to a relative second position (see Figure 2) with respect to magnet assembly 10. Movement of cam follower 50 from the first position to the second position actuates rotation of gripping arm 3, in particular plastic base structure 8 around axis A. Furthermore, cam follower 50 is directed from the relative second position to the relative first position as a result of the attractive forces between magnet element 9 and magnet assembly 10.

In further detail, the cam profile is designed to define the portions of the path of gripping assembly 1 at which gripping assembly 1 is in its closed and open configuration. In the specific example, the cam profile is designed in such a manner that the interaction of cam follower 50 and the cam profile provides for the input force along the portion or the portions of the path at which gripping assembly 1 is to be controlled into its open configuration. Even more particularly, the cam profile is designed in such a manner that gripping assembly 1 is controlled into the open configuration at the receiving and the delivery station.

In use, gripping assembly 1 advances along the path through the receiving station and the delivery station. During advancement gripping assembly 1 grips one respective bottle 2 while advancing between the receiving station and the delivery station. In particular, gripping assembly 1 is controlled into its closed configuration while advancing from the receiving station to the delivery station. Furthermore, gripping assembly 1 is controlled into its open configuration at the receiving station and at the delivery station for respectively receiving and releasing bottle 2.

In particular, gripping assembly 1 is moved from the closed configuration to the open configuration by actuating a rotation of gripping arm 3 around axis A. In particular, rotation of gripping arm 3 is actuated by a movement of cam follower 50 from the relative first position to the relative second position. The movement of cam follower 50 is determined by the cam profile.

Furthermore, gripping assembly 1 is moved from the open configuration to the closed configuration due to the force exerted by biasing means 5. In more detail, the interaction of cam follower 50 and the cam profile does not provide an input force anymore acting against the action of biasing means 5. In particular, the attractive forces of magnet assembly 10 and magnet element 9 lead to rotation of gripping arm 3 around axis A. This also leads to movement of cam follower 50 from the relative second position to the relative first position.

The rotation of gripping arm 3 around axis A is transferred to gripping arm 4 so that gripping arm 4 rotates around axis B so that clamping sections 17 and 24 withdraw from each other. The transfer is obtained by coupling assembly 5, in particular by interaction of actuation element 30 with actuation element 31.

As actuation element 30 is connected to gripping arm 3, rotation of gripping arm 3 also leads to rotation of actuation element 30 around axis A. As engagement means 32, in particular the respective tooth members 35 of actuation element 30 interact with engagement means 33, in particular the respective tooth members 35 of actuation element 31 rotation of actuation element 30 leads to rotation of actuation element 31 around axis B. As actuation element 31 is connected to gripping arm 4 the rotation of actuation element 31 leads also to rotation of gripping arm 4 around axis B.

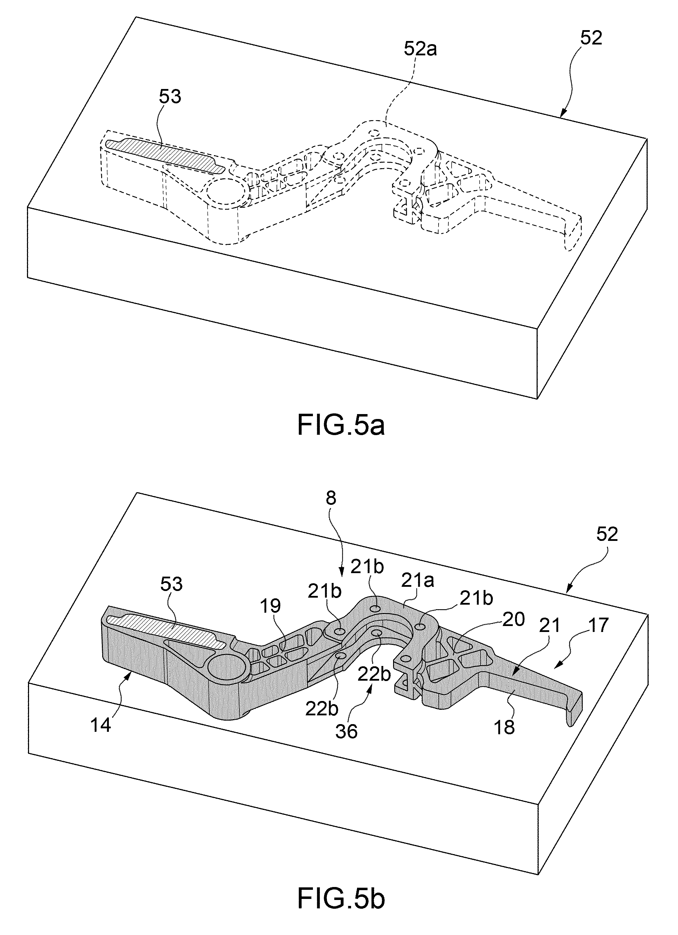

The method for producing gripping assembly 1 is schematically shown in Figures 5a to 5e. The method comprises the following steps:
- molding plastic base structure 8 during a first molding phase;
- inserting magnet element 9 into cavity 13 of plastic base structure 8; and
- encapsulating magnet element 9 within cavity 13 during a second molding phase.

Preferably, prior to the second molding step and after the insertion of magnet element 9 into cavity 13 a spacer element 16 is placed within cavity 13, in particular on top of magnet element 9. Spacer element 9 is adapted to reduce the thermal impact on magnet element 9 during the second molding phase. This is preferable, as a significant increase of the temperature of magnet element 9 leads to an alteration of the magnetic properties, in particular in a reduction of the magnetic field strength of magnet element 9. Otherwise, the choice of magnet element 9 in terms of the magnetic field strength must be made considering also the reduction of the magnetic field strength during the second molding phase.

In more detail, the first molding phase comprises the step of injecting molten plastic material (see Figure 5b) into a main gripping arm mold 52.

In further detail, main gripping arm mold 52 (see Figure 5a) having a mold cavity 52a designed to define the shape of plastic base structure 8. Furthermore, during the first molding phase an insert 53 defining cavity 13 within plastic base structure 8 is inserted in main gripping arm mold 52. In particular insert 53 is coupled to an upper cover of main gripping arm mold 52. Preferably, insert 53 has a shape similar to the shape of permanent magnet 9.

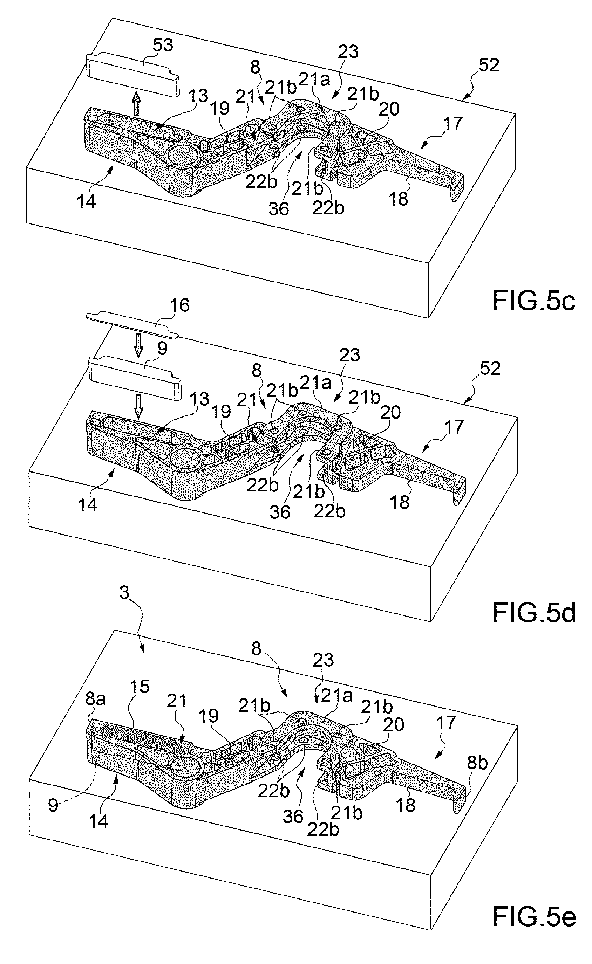

Then, after the first molding phase, in particular after solidification of the molten plastic material to form plastic base structure 8, insert 53 is removed from main gripping arm mold 52 (see Figure 5c).

Furthermore, after insertion of magnet element 9 and preferably of spacer element 16 (see Figure 5d) the second molding phase comprises the step of injecting molten plastic material into main gripping element mold 52 (see Figure 5e). In particular, during the second molding phase cover portion 15 of gripping arm 4 is obtained.

Favorably, in between the first and second molding phases plastic base structure 8 remains in main gripping arm mold 52; i.e. plastic base structure 8 is not removed from and reinserted into main gripping arm mold 52.

Preferentially, the plastic material used during the first and the second molding phases is the same.

It should be further noted that also gripping arm 4 and actuation elements 30 and 31 are obtained from molding processes known as such and not further explained. Preferably, also gripping arm 4 and actuations elements 30 and 31 are produced from a plastic material identical to the one used during the first molding phase.

Then, the method further comprises an assembly phase during which gripping arms 3 and 4 are coupled to one another. The assembly phase comprises the steps of:
- connecting actuation element 30 to gripping arm 3;
- connecting actuation element 31 to gripping arm 4;
- approaching gripping arms 3 and 4 towards each other in such a manner that engagement means 32 and 33 of respectively actuation elements 30 and 31 engage with each other; and
- connecting gripping arms 3 and 4 to one another by means of connecting member 47, in particular by connecting connecting member 47 to lower surface 22 and the lower surface of gripping arm 4, even more particular by connecting connecting member 47 to lower surface portion 22a and the lower surface portion of housing recess 45 so that engagement means 32 and 33 remain engaged to one another.

In more detail, connecting actuation element 30 to gripping arm 3 comprises the steps of:
- placing actuation element 30 into housing recess 36 of gripping arm 3;
- positioning actuation element in such a manner that each one of through-holes 34a of actuation element 30 is coaxially-aligned with one relative upper hole 21b and with one respective lower hole 22b; and
- guiding through each one of through-holes 34a of actuation element 30 and relative upper and lower holes 21b and 22b one respective pin member 41.

Furthermore, screw assembly 42 is connected to gripping arm 3 securing the relative pin members 41. In more detail, bushing member 43 is partially placed within central hole 34b of actuation element 30, in particular in such a manner that the relative head portions 41a of the respective pin members 41 are partially sandwiched between shoulder portion 43a and upper surface 21, in particular upper surface portion 21a.

Then, securing element 44 is connected to bushing member 43, in particular lower portion 43a securing bushing member 43 and gripping arm 3, in particular plastic base structure 8 to one another. Furthermore, securing element 44 also secures connecting member 47 to gripping arms 3 and 4.

Connecting actuation element 31 to gripping arm 4 is similar to connecting actuation element 30 to gripping arm 3 and the following description is limited to the differences between them.

In particular, actuation element 31 is placed into housing recess 45 of gripping arm 4. Actuation element 31 is placed in such a manner that through-holes 34a are coaxially-aligned with one relative upper hole 27b and with one respective lower hole of housing recess 45 and one respective pin member 41 is guided through each one of through-holes 34a and the relative upper hole 27b and the respective lower hole of housing recess 45.

The respective screw assembly 42 is connected to gripping arm 4 securing the relative pin members 41. AS well, bushing member 43 is partially placed within central hole 34b of actuation element 31, in particular in such a manner that the relative head portions 41a of the respective pin members 41 are partially sandwiched between shoulder portion 43a and upper surface 27, in particular upper surface portion 27a.

The advantages of gripping assembly according to the present invention will be clear from the foregoing description. Additionally, also the advantages of the method for producing the gripping assembly according to the present invention will be clear from the foregoing description.

In particular, gripping assembly 1 has an improved reliability as the interaction of magnet element 9 and magnet assembly 10 is not subject to any wear.

A further advantage lies in the light-weight properties of gripping assembly 1 as mainly plastic material is used. This means that the motor chosen for driving rotation of the carousel to which gripping assemblies 1 are mounted to comes along with a reduced performance with respect to the ones used in the state-of-the-art. This reduces the purchasing costs and the operative costs, in particular due to a reduction in the power consumption.

An even further advantage lies in the low costs of gripping assembly 1 as plastics material is used. This is further accentuated as gripping arm 3 comprises reticular portion 19 and 20 and gripping arm 4 has reticular portion 26. This further reduces the costs of production as less plastic material is required.

Reticular portions 19, 20 and 26 also allow good characteristics in terms of hygienic design as the reticular portions allow for the cleaning and/or sterilizing agents running easily off.

Furthermore, the production of gripping assembly 1 is simple and fast. Gripping arm 3 is produced during two molding phases and favorably the workpiece remains in main gripping arm mold 52 during the two molding phases. This also provides for the advantage that magnet element 9 is encapsulated within plastic base structure 8. Relying on two molding phases further allows to avoid the presence of edges on upper surface 21 in the area of cavity section 14, in particular in correspondence with the contour of cover portion 15.

An even additional advantage is the coupling of gripping arms 3 and 4 with each other. Rotation of gripping arm 3 is transferred to rotation of gripping arm 4. Actuation elements 30 and 31 are connected to respectively housing recess 36 and 45 in a manner allowing for easy maintenance. In case of need solely screw assemblies 42 needs to be actuated for allowing extraction of pin members 41 which are favorably loosely housed within the respective through-holes 34a.

Clearly, changes may be made to the method of producing gripping assembly 1 as described herein without, however, departing from the scope of protection as defined in the accompanying claims.

Furthermore, changes may be made to gripping assembly 1 as described herein without, however, departing from the scope of protection as defined by the accompanying claims.

## Claims

1. Method for producing a gripping assembly (1) adapted to retain receptacles (2) in a receptacle handling machine;
each gripping assembly (1) comprises a main gripping arm (3) and an auxiliary gripping arm (4); the main and the auxiliary gripping arms (3, 4) being adapted to grip in cooperation one respective receptacle (2) ;
main gripping arm (3) comprises:
- at least one magnet element (9); and
- a plastic base structure (8) having at least one cavity (13) adapted to receive the at least one magnet element (9);
the method comprises the steps of:
- molding the plastic base structure (8) during a first molding phase; and
- inserting the at least one magnet element (9) into the cavity (13) of the plastic base structure (8);
the method being **characterized by** further comprising the step of encapsulating the at least one magnet element (9) within the cavity (13) during a second molding phase.

2. The method according to claim 1 further comprising the step of placing a spacer element (16) within the cavity (13) prior to the second molding step and after the insertion of the magnet element (9) into the cavity (13).

3. The method according to claim 1 or 2, wherein the first molding phase comprises the step of injecting molten plastic material into a main gripping arm mold (52);
the method further comprises the step of removing an insert (53) defining the cavity (13) from the main gripping arm mold (52).

4. The method according to claim 3, wherein the second molding phase comprises the step of injecting molten plastic material into the main gripping arm mold (52).

5. The method according to any one of the preceding claims further comprising the step of coupling the auxiliary gripping arm (4) and the main gripping arm (3) to one another by:
- connecting a first actuation element (30) having first engagement means (32) to the main gripping arm (3) ;
- connecting a second actuation element (31) having second engagement means (33) to the auxiliary gripping arm (4);
- approaching the main and the auxiliary gripping arms (3, 4) to each other in such a manner that the first and the second engagement means (32, 33) engage with each other; and
- connecting the main and the auxiliary gripping arm (3, 4) one to another by means of a connecting member (47) so that the first and the second engagement means (32, 33) remain engaged to one another.

6. The method according to claim 5, wherein the main gripping arm (4) comprises a first housing recess (36) adapted to at least partially receive the first actuation element (30); the first housing recess (36) having a relative upper surface portion (21a) and a relative lower surface portion (22a); wherein the upper surface portion (21a) comprises a plurality of upper holes (21b) and the lower surface portion (22a) comprises a plurality of lower holes (22b); wherein each upper hole (21b) is coaxially arranged with one respective lower hole (22b);
wherein the step of connecting the first actuation element (30) to the main gripping arm (3) comprises the steps of:
- placing the first actuation element (30) into the first housing recess (36);
- positioning the first actuation element (30) in such a manner that each one of a plurality of through-holes (34a) of the first actuation element (30) is coaxially-aligned with one relative upper hole (21b) and with the respective lower hole (22b); and
- guiding through each one of the plurality of through-holes (34a) and the relative upper and lower hole (21b, 22b) one respective pin member (41).

7. The method according to claim 6, wherein each pin member (41) comprises a head portion (41a) and a plain shank portion (41b);
the method further comprises the step of partially placing a bushing member (43) having a shoulder portion (43a) within a central hole (34b) of the first actuation element (30) and sandwiching the relative head portions (41a) of the pin members (41) at least partially between the shoulder portion (43a) and the upper surface portion (21a).

8. A gripping assembly (1) for retaining receptacles (2) in a receptacle handling machine;
the gripping assembly (1) comprises a main gripping arm (3) and an auxiliary gripping arm (4) adapted to move between a closed configuration at which the gripping assembly (1) is adapted to grip one receptacle (2) and an open configuration at which the gripping assembly (1) is adapted to disengage from the receptacle (2);
**characterized in that** the main gripping arm (3) comprises a plastic base structure (8) and at least one magnet element (9) encapsulated within the plastic base structure (8).

9. The gripping assembly according to claim 8, wherein the plastic base structure (8) comprises at least one reticular portion (19, 20).

10. The gripping assembly according to claim 9, wherein the plastic base structure (8) comprises:
- a cavity (13) housing the magnet element (9) provided in a cavity section (14) arranged at a first end portion (8a) of the plastic base structure (8); and
- a clamping section (17) adapted to at least partially engage with the receptacle (2), the clamping section (17) being arranged at a second end portion (8b) opposite of the first end portion (8a);
wherein the at least one reticular portion (19) is arranged between the cavity section (17) and the clamping section (17).

11. The gripping assembly according to any one of claims 8 to 10, wherein the auxiliary gripping arm (4) comprises at least one respective reticular portion (26).

12. The gripping assembly according to any one of claims 8 to 11, wherein the gripping assembly (1) comprises a magnet assembly (10) spaced apart from the main gripping arm (3) and configured to cooperate with the magnet element (9) of the main gripping arm (3) so as to bias the gripping assembly (1) into its closed or open configuration.

13. The gripping assembly according to any one of claims 8 to 12 further comprising a coupling assembly (5) coupling the main and the auxiliary gripping arm (3, 4) one to another and adapted to transfer a rotation of the main gripping arm (3) around a first rotation axis (A) to the auxiliary gripping arm (4) around a second axis (B);
wherein the coupling assembly (5) comprises a first actuation element (30) having first engagement means (32) and being connected to the main gripping arm (3); and
- a second actuation element (31) having second engagement means (33) being connected to the auxiliary gripping arm (4) and, the second engagement means (33) being adapted to engage and cooperate with the first engagement means (32).

14. The gripping assembly according to claim 13, wherein the main gripping arm (3) comprises a first housing recess (26) at least partially housing the first actuation element (30) and the auxiliary gripping arm (4) comprises a second housing recess (36) at least partially housing the second actuation element (31);
the first housing recess (36) having a first upper surface portion (21a) and a first lower surface portion (22a); wherein the first upper surface portion (21a) comprises a plurality of first upper holes (21b) and the first lower surface portion (22a) comprises a plurality of first lower holes (22b); wherein each first upper hole (21b) is coaxially arranged with one respective first lower hole (22b);
wherein the first actuation element (30) comprises a plurality of first through-holes (34a), each first through-hole (34a) being coaxially-aligned with one relative first upper hole (21b) and with the respective first lower hole (22b);
the second housing recess (45) having a second upper surface portion (27a) and a second lower surface portion; wherein the second upper surface portion (27a) comprises a plurality of second upper holes (27b) and the second lower surface portion comprises a plurality of second lower holes; wherein each second upper hole (27b) is coaxially arranged with one respective second lower hole;
wherein the second actuation element (31) comprises a plurality of second through-holes (34a), each second through-hole (34a) being coaxially-aligned with one relative second upper hole (27b) and with the respective second lower hole;
the gripping assembly (1) comprises a plurality of pin members (41), each one extending through one respective through-hole (34a) and the respective first upper and lower holes (21b, 22b) or the respective second upper hole (27b) and the respective lower hole.

15. The gripping assembly according to claim 14, wherein each pin member (41) comprises a head portion (41a) contacting the relative first or second upper surface portion (21a; 27a) and a plain shank portion (41b) extending through the respective through-hole (34a) so that each pin member (41) is loosely housed within each one of the respective through-holes (34a);
wherein the gripping assembly (1) further comprises securing means (42) interacting with the head portions (41a) of the pin members (41) and securing the relative head portions (41a) on respectively the first or second upper surface portions (21a, 27a).

16. The gripping assembly according to claim 15, wherein the clamping means (43) comprise at least one bushing member (43) having a shoulder portion (43a); the at least one bushing member (43) is at least partially housed within a central hole (34b) of the first actuation element (30) and the relative head portions (41a) of the pin members (41) are partially sandwiched between the shoulder portion (43a) and the upper surface portion (21a);
wherein the gripping assembly (1) further comprises at least one securing element (44) interacting with the bushing member (43) and with the main gripping arm (3) for securing the bushing member (43) and the gripping arm (3) to one another.

17. A gripping assembly (1) the gripping assembly (1) comprises a main gripping arm (3) and an auxiliary gripping arm (4) adapted to move between a closed configuration at which the gripping assembly (1) is adapted to grip one receptacle (2) and an open configuration at which the gripping assembly (1) is adapted to disengage from the receptacle (2); wherein the main gripping arm (3) comprises a plastic base structure (8) and at least one magnet element (9);
**characterized by** being produced according to the method of any one of claims 1 to 7.
